(19) Europäisches Patentamt
European Patent Office
Office européen des brevets

(11) **EP 3 948 337 B1**

(12) **FASCICULE DE BREVET EUROPEEN**

(45) Date de publication et mention
de la délivrance du brevet:
**07.06.2023  Bulletin 2023/23**

(21) Numéro de dépôt: **20734577.8**

(22) Date de dépôt: **01.07.2020**

(51) Classification Internationale des Brevets (IPC):
**G01S 3/02** (2006.01)

(52) Classification Coopérative des Brevets (CPC):
**G01S 3/02**

(86) Numéro de dépôt international:
**PCT/EP2020/068475**

(87) Numéro de publication internationale:
**WO 2021/001408 (07.01.2021 Gazette 2021/01)**

(54) **PROCÉDÉ ET DISPOSITIF DE CALCUL DE FONCTIONS DE VISIBILITÉ POUR UN RADIOMÈTRE À SYNTHÈSE D'OUVERTURE INTERFÉROMÉTRIQUE**

VERFAHREN UND VORRICHTUNG ZUR BERECHNUNG VON SICHTBARKEITSFUNKTIONEN FÜR EIN INTERFEROMETRISCHES RADIOMETER MIT SYNTHETISCHER APERTUR

METHOD AND DEVICE FOR CALCULATING VISIBILITY FUNCTIONS FOR A SYNTHETIC APERTURE INTERFEROMETRIC RADIOMETER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **03.07.2019  FR 1907378**

(43) Date de publication de la demande:
**09.02.2022  Bulletin 2022/06**

(73) Titulaire: **Airbus Defence and Space SAS
31402 Toulouse Cedex 4 (FR)**

(72) Inventeur: **JEANNIN, Nicolas
31402 Toulouse Cedex 4 (FR)**

(74) Mandataire: **Ipside
6, Impasse Michel Labrousse
31100 Toulouse (FR)**

(56) Documents cités:
**CN-A- 108 375 767**

• **ZHANG CHENG ET AL: "Clock scanning microwave interferometric radiomter and its potential applications at GEO", 2014 13TH SPECIALIST MEETING ON MICROWAVE RADIOMETRY AND REMOTE SENSING OF THE ENVIRONMENT (MICRORAD), IEEE, 24 mars 2014 (2014-03-24), pages 147-150, XP032629900, DOI: 10.1109/MICRORAD.2014.6878928**

**Description**

**Domaine de l'invention**

La présente invention appartient notamment au domaine de l'observation de la Terre à l'aide d'un radiomètre à synthèse d'ouverture interférométrique. Notamment, l'invention concerne un procédé et un dispositif de calcul de fonctions de visibilité pour un radiomètre à synthèse d'ouverture interférométrique.

**Etat de la technique**

Un radiomètre est un instrument permettant de mesurer le rayonnement thermique naturel d'une source dont la température est supérieure au zéro absolu. Cet instrument a été proposé initialement dans le domaine de la radioastronomie et est utilisé dans diverses applications telles que l'observation de la Terre à haute résolution et la mesure du niveau et de la salinité de la mer.

La synthèse d'ouverture interférométrique utilisée par certains radiomètres ou radiotélescopes repose sur un calcul d'intercorrélation de signaux radio reçus par un réseau de chaînes de réception radiofréquences dont les caractéristiques sont proches ou identiques (on entend par le terme radiofréquence, ou RF, l'ensemble des ondes radioélectriques dont le spectre est situé entre 3 kHz et 300 GHz).

Un calcul d'intercorrélation entre ces chaînes de réception est également appelé « fonction de visibilité ». Il permet d'accéder à la transformée de Fourier de l'émissivité en utilisant le théorème de Zernike - Van Cittert. Cette donnée peut ensuite être utilisée pour reconstruire une image correspondant à un champ de température de brillance en utilisant divers algorithmes de reconstruction.

La demande de brevet CN 108375767 A et le document « Clock scanning microwave interferometric radiometer and its potentioal applications at GEO » (Zhang Cheng et al., 2014 13TH SPECIALIST MEETING ON MICROWAVE RADIOMETRY AND REMOTE SENSING OF THE ENVIRONMENT (MICRORAD)) illustrent par exemple l'utilisation de l'intercorrélation entre des couples d'antennes d'un réseau pour déterminer des fonctions de visibilité dans un radiomètre.

Un radiomètre est généralement utilisé pour imager des sources radiofréquences naturelles (sols, corps célestes, atmosphère) et opère dans des bandes de fréquences réservées dans lesquelles les émissions anthropiques sont strictement réglementées par l'Union internationale des télécommunications ou UIT (« International Telecommunication Union » ou ITU dans la littérature anglo-saxonne).

Il est très important, vu la faible puissance des signaux naturels à imager, que des émissions anthropiques n'interfèrent pas avec ces signaux, afin de ne pas biaiser les mesures effectuées par l'instrument. Ces émissions anthropiques peuvent être causées par des émissions illicites dans une bande de fréquences d'intérêt sur laquelle opère le radiomètre, ou par des émissions parasites provenant d'émetteurs dans des bandes autorisées, et contaminant les bandes adjacentes.

Pour ne pas biaiser la mesure réalisée, il est nécessaire de détecter et dans la mesure du possible de supprimer les signaux interférents de la mesure radiométrique. Ceci est vrai aussi bien pour la radiométrie à ouverture réelle que pour la radiométrie à synthèse d'ouverture interférométrique.

Dans le cas d'un radiomètre à ouverture réelle, une solution consiste à analyser diverses caractéristiques du signal reçu pour détecter la présence de signaux anthropiques à l'aide d'un processeur numérique.

Au lieu de détecter un niveau de puissance de manière analogique, le signal est numérisé sur la bande de fréquences d'intérêt du radiomètre, et des caractéristiques statistiques du signal sont analysées par le processeur numérique. Parmi les caractéristiques qui peuvent être analysées, on peut citer par exemple :

- une mesure de l'acuité et/ou de l'aplatissement de la distribution statistique, par exemple par le kurtosis (il s'agit d'une distribution gaussienne dans le cas du bruit thermique, alors qu'il s'agit généralement d'une distribution non gaussienne dans le cas de signaux artificiels),
- une mesure de la densité spectrale de puissance, et sa stabilité temporelle (la densité spectrale de puissance est sensiblement constante dans le cas d'une émission naturelle, alors que cela n'est généralement pas le cas pour une émission artificielle),
- la nature de la polarisation (une émission est faiblement polarisée dans le cas d'une émission naturelle, alors qu'une émission anthropique est généralement polarisée circulairement ou linéairement),
- une décomposition en ondelettes.

Ces différentes caractéristiques peuvent être analysées sur une décomposition en temps et en fréquence du signal mesuré. Une telle décomposition permet notamment de lutter efficacement contre des émissions interférentes présentant une largeur de bande limitée mais continue dans le temps, et contre des émissions interférentes sporadiques ayant une largeur de bande importante mais temporellement discontinues (par exemple des émissions radars). Dès lors, certains blocs temps/fréquences obtenus par la décomposition en temps et en fréquence du signal reçu peuvent être considérés invalides et par conséquent être éliminés du calcul de la puissance du signal. De telles dispositions peuvent certes entraîner une dégradation de la précision radiométrique correspondant à la fraction des blocs temps/fréquences éliminés, mais cet inconvénient est largement compensé par le gain de précision engendré par la suppression des interférences.

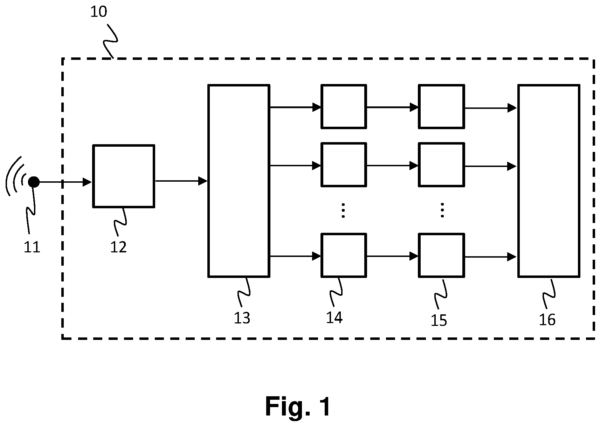

La figure 1 représente schématiquement un exemple d'une chaîne 10 de traitement des interférences pour un radiomètre à ouverture réelle. La chaîne 10 de traitement est associée à une antenne 11 du radiomètre et comporte notamment un numériseur 12, un module 13 de filtrage, des modules 14 de calcul d'indicateurs statistiques, des accumulateurs 15 desdits indicateurs statistiques, et un module 16 de détection et de suppression de blocs temps/fréquences invalides.

L'antenne 11 est adaptée pour recevoir un signal sur une bande de fréquences d'intérêt du radiomètre. Le numériseur 12 est configuré pour échantillonner le signal reçu. Le module 13 de filtrage a pour objectif de décomposer les échantillons obtenus en différentes sous-bandes de fréquences, l'ensemble desdites sous-bandes de fréquences recouvrant la bande d'intérêt du radiomètre. A chaque sous-bande de fréquences est associée un module 14 de calcul et un accumulateur 15 d'indicateurs statistiques. Les indicateurs statistiques sont donc calculés par sous-bande de fréquences et accumulés pendant un certain temps pour réduire l'incertitude statistique. Des blocs issus d'une décomposition en temps et fréquence du signal reçu sont ainsi associés à des valeurs d'indicateurs statistiques. En fonction des valeurs prises par ces indicateurs statistiques, certains blocs temps/fréquences sont considérés comme invalides par le module 16 de détection et de suppression. Ces blocs invalides ne sont alors pas pris en compte pour les calculs ultérieurs des grandeurs d'intérêt du signal reçu par le radiomètre (notamment une mesure de la puissance et du paramètre de Stokes).

Contrairement à un radiomètre à ouverture réelle qui ne comporte qu'une seule antenne, un radiomètre à synthèse d'ouverture interférométrique comporte plusieurs antennes formant un réseau d'antennes. Une chaîne de réception est associée à chaque antenne du réseau, et des calculs d'intercorrélation sont exécutés entre les sorties des différentes chaînes de réception.

L'application directe de l'approche décrite précédemment en référence à la figure 1 pour un radiomètre à ouverture réelle au cas d'un radiomètre à synthèse d'ouverture interférométrique n'est cependant pas efficace.

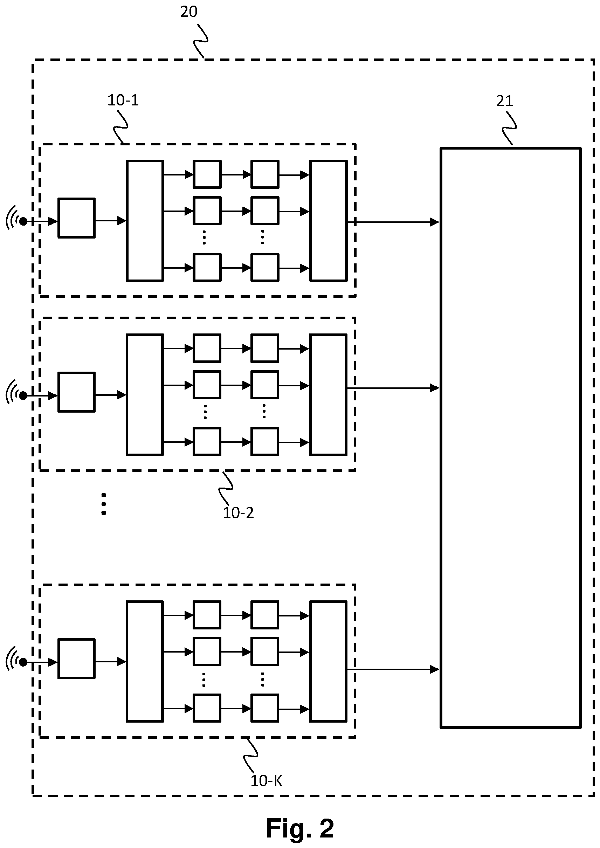

La figure 2 représente schématiquement une telle application directe de l'approche décrite à la figure 1 au cas d'un radiomètre à synthèse d'ouverture interférométrique. La figure 2 représente notamment un dispositif 20 de calcul de fonctions de visibilité pour un radiomètre à synthèse d'ouverture interférométrique. Sur l'exemple décrit à la figure 2, une chaîne 10 de traitement est associée à chaque antenne du réseau d'antennes du radiomètre à synthèse d'ouverture interférométrique. Si le réseau comporte un nombre K d'antennes, on obtient ainsi K chaînes 10-1, 10-2, ..., 10-K de traitement. Seuls les blocs temps/fréquences considérés comme valides par les différentes chaînes de traitement sont pris en compte par un corrélateur 21 qui est responsable du calcul des fonctions de visibilité (c'est-à-dire le calcul de valeurs intercorrélation entre les différentes chaînes de traitement).

Une antenne d'un réseau d'antennes d'un radiomètre à synthèse d'ouverture interférométrique est généralement de petite taille comparativement à l'antenne d'un radiomètre à ouverture réelle. Aussi, au niveau d'une telle antenne du réseau d'antennes d'un radiomètre à synthèse d'ouverture interférométrique, le rapport entre la puissance d'un signal interférent et la puissance de bruit (le bruit émis par la Terre correspondant à ce que le radiomètre cherche à mesurer) est plus faible que ce même rapport observé au niveau de l'antenne d'un radiomètre à ouverture réelle. Pour pouvoir détecter et supprimer un signal interférent au niveau d'une chaîne de traitement 10-1 à 10-K du dispositif 20 de calcul des fonctions de visibilité du radiomètre à synthèse d'ouverture interférométrique, il faudrait alors utiliser un seuil de détection tellement faible que de nombreuses fausses détections auraient lieu et une très grande partie du signal serait considéré comme invalide. La précision de la mesure serait alors significativement réduite.

Certaines méthodes existantes cherchent à détecter voire localiser des sources d'interférences en analysant des fluctuations spatiales ou angulaires des températures de brillance mesurées par le radiomètre. Néanmoins, ces méthodes impliquent généralement la suppression pure et simple de certaines portions de l'image reconstruite, ce qui est préjudiciable à l'apport scientifique de la donnée produite. En outre, ces méthodes ne permettent généralement pas de détecter des sources d'interférences faibles.

D'autres techniques basées sur des méthodes classiques de détermination de direction d'arrivée de signaux sur des réseaux d'antennes ont été considérées. Ces méthodes permettent de localiser les sources d'interférence. Il est ensuite envisageable de soustraire de l'image produite le signal interférent convolué avec la réponse impulsionnelle de l'instrument ou d'utiliser une méthode de formation de faisceau créant un trou en direction de la source interférente. Ces méthodes conduisent néanmoins elles aussi à des artefacts importants dans les données produites.

Il n'existe donc pas actuellement de solution pour détecter et supprimer de manière efficace un signal interférent dans des radiomètres à synthèse d'ouverture interférométrique.

## Exposé de l'invention

La présente invention a pour objectif de remédier à tout ou partie des inconvénients de l'art antérieur, notamment ceux exposés ci-avant, en proposant une solution pour supprimer la contribution des interférences dans le calcul des fonctions de visibilité d'un radiomètre à synthèse d'ouverture interférométrique.

A cet effet, et selon un premier aspect, il est proposé par la présente invention, un procédé de calcul de fonctions de visibilité pour un radiomètre à synthèse d'ouverture interférométrique. Le radiomètre comporte un réseau d'antennes et plusieurs chaînes de réception.

Chaque chaîne de réception est respectivement associée à une antenne du réseau d'antennes. Le procédé comporte :

- pour chaque chaîne de réception, une numérisation, sur une bande de fréquences d'intérêt, d'un signal reçu par l'antenne de ladite chaîne de réception avec une fréquence d'échantillonnage au moins égale à la largeur de ladite bande de fréquences d'intérêt,
- pour chaque chaîne de réception, un filtrage du signal numérisé dans plusieurs sous-bandes de fréquences, l'ensemble desdites sous-bandes de fréquences recouvrant la bande d'intérêt, afin d'obtenir, dans chaque sous-bande de fréquences, plusieurs échantillons filtrés, chaque échantillon filtré correspondant à une période de filtrage de durée prédéterminée,
- un calcul, pour chaque sous-bande de fréquences, d'une matrice d'intercorrélation, un élément d'une matrice d'intercorrélation étant associé à un couple de deux antennes du réseau d'antennes et prenant une valeur calculée en fonction des échantillons filtrés associés auxdites antennes pendant une période d'accumulation de durée prédéterminée,
- une détection de matrices d'intercorrélation invalides parmi un ensemble de matrices d'intercorrélation obtenues respectivement pour les différentes sous-bandes de fréquences et pour différentes périodes d'accumulation,
- un calcul des fonctions de visibilité à partir des matrices d'intercorrélation qui n'ont pas été détectées comme étant invalides.

De telles dispositions permettent de détecter et supprimer des interférences dont les niveaux de puissance par rapport au signal utile sont nettement plus faibles que dans les méthodes utilisées ou envisagées jusqu'à présent dans le domaine de la radiométrie à synthèse d'ouverture interférométrique.

Le filtrage du signal numérisé en plusieurs sous-bandes de fréquences correspond à une « canalisation » du signal. Autrement dit, le signal numérisé est découpé en plusieurs canaux dans le domaine fréquentiel, chaque canal correspondant à une sous-bande de fréquences.

La détection des interférences est réalisée à partir des valeurs d'intercorrélation calculées, avant de synthétiser une image. Cela permet d'atteindre de meilleures performances de détection des interférences par rapport aux cas où la détection est effectuée avant les calculs d'intercorrélation ou après la synthèse d'image.

Dans des modes particuliers de mise en oeuvre, l'invention peut comporter en outre l'une ou plusieurs des caractéristiques suivantes, prises isolément ou selon toutes les combinaisons techniquement possibles.

Dans des modes particuliers de mise en oeuvre, la détection de matrices d'intercorrélation invalides comporte une comparaison des valeurs d'intercorrélation au sein d'une même matrice d'intercorrélation par rapport à un seuil prédéterminé.

Dans des modes particuliers de mise en oeuvre, la détection de matrices d'intercorrélation invalides comporte une comparaison d'une variation des valeurs d'intercorrélation entre plusieurs matrices d'intercorrélation correspondant à plusieurs sous-bandes de fréquences différentes par rapport à un seuil prédéterminé.

Dans des modes particuliers de mise en oeuvre, la durée d'une période d'accumulation est inférieure à la durée d'une période de répétition pressentie de signaux anthropiques interférents.

Selon un deuxième aspect, la présente invention concerne un produit programme d'ordinateur comportant un ensemble d'instructions de code de programme qui, lorsqu'elles sont exécutées par un ou plusieurs processeurs, configurent le ou les processeurs pour mettre en oeuvre un procédé de calcul de fonctions de visibilité selon l'un quelconques des modes de mise en oeuvre précédents.

Selon un troisième aspect, la présente invention concerne un dispositif de calcul de fonctions de visibilité pour un radiomètre à synthèse d'ouverture interférométrique. Le radiomètre comporte un réseau d'antennes. Le dispositif comporte plusieurs chaînes de réception. Chaque chaîne de réception est destinée à être associée respectivement à une antenne du réseau d'antennes. Le dispositif comporte :

- pour chaque chaîne de réception, un numériseur permettant de numériser, sur une bande de fréquences d'intérêt, un signal reçu par l'antenne associée à ladite chaîne de réception avec une fréquence d'échantillonnage au moins égale à la largeur de ladite bande d'intérêt,
- pour chaque chaîne de réception, un module de filtrage permettant de filtrer le signal numérisé dans plusieurs sous-bandes de fréquences, l'ensemble desdites sous-bandes de fréquences recouvrant la bande d'intérêt, afin d'obtenir en sortie du module de filtrage, dans chaque sous-bande de fréquences, plusieurs échantillons filtrés, chaque échantillon filtré correspondant à une période de filtrage de durée prédéterminée,
- un corrélateur permettant de calculer, pour chaque sous-bande de fréquences, une matrice d'intercorrélation, un élément d'une matrice d'intercorrélation étant associé à un couple de deux antennes du réseau d'antennes et prenant une valeur calculée en fonction des échantillons filtrés associés auxdites antennes pendant une période d'accumulation de durée prédéterminée,
- un module de détection permettant de détecter des matrices d'intercorrélation invalides parmi un ensemble de matrices d'intercorrélation obtenues respectivement pour les différentes sous-bandes de fréquences et pour différentes périodes d'accumulation,

- un module de calcul permettant de calculer des fonctions de visibilité à partir des matrices d'intercorrélation qui n'ont pas été détectées comme étant invalides.

Selon un quatrième aspect, la présente invention concerne un radiomètre à synthèse d'ouverture interférométrique comportant un tel dispositif de calcul de fonctions de visibilité.

Dans des modes particuliers de réalisation du radiomètre, au moins deux chaînes de réception différentes sont associées respectivement à deux polarisations différentes d'une seule et même antenne.

Selon un cinquième aspect, la présente invention concerne une charge utile d'un satellite comportant un radiomètre à synthèse d'ouverture interférométrique selon l'un quelconque des modes de réalisation précédents.

La solution proposée est en effet particulièrement bien adaptée pour le cas où un radiomètre à synthèse d'ouverture interférométrique est embarqué dans une charge utile d'un satellite. En effet, dans un tel cas, le calcul de la corrélation à bord du satellite permet d'éviter de transmettre tous les échantillons obtenus à une station au sol pour un traitement des échantillons par la station. Le nombre d'échantillons est en effet potentiellement grand si le nombre de chaînes de réception est important. La détection et la suppression des interférences est alors elle aussi réalisée à bord du satellite dans un même temps que la corrélation.

**Présentation des figures**

L'invention sera mieux comprise à la lecture de la description suivante, donnée à titre d'exemple nullement limitatif, et faite en se référant aux figures 1 à 11 qui représentent :

[Fig. 1] une représentation schématique d'une chaîne de traitement des interférences pour un radiomètre à ouverture réelle (figure déjà décrite),
[Fig. 2] une représentation schématique d'une application directe de l'approche décrite à la figure 1 au cas d'un radiomètre à synthèse d'ouverture interférométrique (figure déjà décrite),
[Fig. 3] une représentation schématique des principales étapes d'un procédé de calcul de fonctions de visibilité pour un radiomètre à synthèse d'ouverture interférométrique,
[Fig. 4] une représentation schématique d'un dispositif de calcul de fonctions de visibilité pour un radiomètre à synthèse d'ouverture interférométrique,
[Fig. 5] une représentation schématique d'une décomposition effectuée par le module de filtrage d'une chaîne de réception avec une sortie des échantillons en parallèle dans le domaine fréquentiel,
[Fig. 6] une représentation schématique d'une décomposition effectuée par le module de filtrage avec une sortie des échantillons en série dans le domaine fréquentiel,
[Fig. 7] une représentation schématique d'une décomposition effectuée par le module de filtrage avec une sortie des échantillons en parallèle dans le domaine temporel,
[Fig. 8] une représentation schématique d'une décomposition effectuée par le module de filtrage avec une sortie des échantillons en série dans le domaine temporel,
[Fig. 9] une représentation schématique d'un ensemble de matrices d'intercorrélation, chaque matrice étant associée respectivement à une sous-bande de fréquences et à une période de filtrage,
[Fig. 10] une représentation schématique d'une matrice d'intercorrélation dont les valeurs sont accumulées pendant une période d'accumulation,
[Fig. 11] une représentation schématique d'un ensemble de blocs temps/fréquences obtenus sur une période d'intégration, chaque bloc temps/fréquences correspondant à une matrice d'intercorrélation dont les valeurs ont été accumulées pendant une période d'accumulation.

Dans ces figures, des références identiques d'une figure à une autre désignent des éléments identiques ou analogues. Pour des raisons de clarté, les éléments représentés ne sont pas nécessairement à une même échelle, sauf mention contraire.

**Description détaillée d'un mode de réalisation de l'invention**

Tel qu'indiqué précédemment, la présente invention vise à proposer une solution pour supprimer la contribution des interférences dans le calcul de fonctions de visibilité d'un radiomètre à synthèse d'ouverture interférométrique.

Dans la suite de la description, on se place à titre d'exemple dans le cas nullement limitatif d'un radiomètre à synthèse d'ouverture interférométrique embarqué dans une charge utile d'un satellite placé en orbite autour de la Terre pour une mission d'observation de la Terre.

Un radiomètre à synthèse d'ouverture interférométrique comporte un réseau d'antennes et plusieurs chaînes de réception. Chaque chaîne de réception est respectivement associée à une antenne du réseau d'antennes. Une fonction de visibilité est calculée pour chaque couple d'antennes dudit réseau d'antennes. La fonction de visibilité pour un couple d'antennes est liée à la corrélation entre les signaux reçus respectivement par les deux antennes dudit couple.

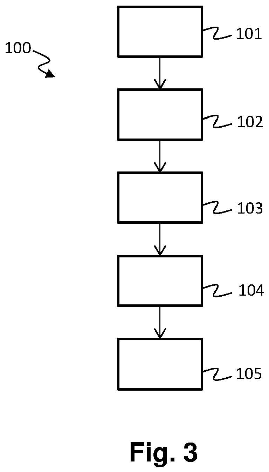

La figure 3 représente schématiquement les principales étapes d'un procédé 100 de calcul de fonctions de visibilité pour un radiomètre à synthèse d'ouverture interférométrique selon l'invention.

Le procédé 100 comporte, pour chaque chaîne de réception, une étape de numérisation 101 d'un signal reçu par l'antenne associée à ladite chaîne de réception. La numérisation du signal reçu est réalisée sur une bande de fréquences d'intérêt avec une fréquence d'échantillonnage au moins égale à la largeur de ladite bande d'intérêt. Par exemple, dans le cas de la bande L, la bande de fréquences d'intérêt peut correspondre aux fréquences comprises entre 1400 et 1427 MHz.

Le procédé 100 comporte également, pour chaque chaîne de réception, une étape de filtrage 102 du signal numérisé obtenu à l'étape précédente dans plusieurs sous-bandes de fréquences. L'ensemble desdites sous-bandes de fréquences sont choisies de telle sorte qu'elles recouvrent la bande d'intérêt. A l'issu de cette étape de filtrage 102, on obtient pour chaque chaîne de réception et pour chaque sous-bande de fréquences plusieurs échantillons filtrés. Chaque échantillon filtré ainsi obtenu correspond à une période de filtrage dont la durée est prédéterminée.

Le procédé 100 comporte ensuite une étape de calcul 103, pour chaque sous-bande de fréquences, d'une matrice d'intercorrélation. Un élément d'une telle matrice d'intercorrélation est associé à un couple d'antennes du réseau d'antennes et prend une valeur calculée en fonction des échantillons filtrés associés auxdites antennes pendant une période d'accumulation dont la durée est prédéterminée.

Le procédé 100 comporte ensuite une étape de détection 104 de matrices d'intercorrélation invalides parmi un ensemble des matrices d'intercorrélation obtenues respectivement pour les différentes sous-bandes de fréquences et pour différentes périodes d'accumulation.

Le procédé 100 comporte ensuite une étape de calcul 105 des fonctions de visibilité en fonction des matrices d'intercorrélation qui n'ont pas été détectées comme étant invalides.

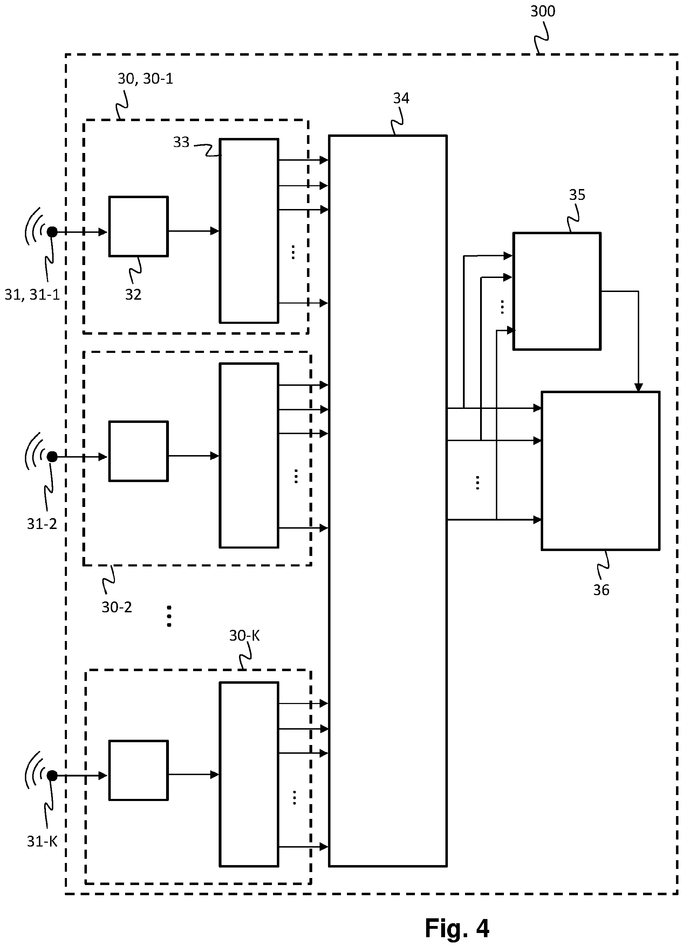

Le procédé 100 selon l'invention est par exemple mis en oeuvre par un dispositif 300 de calcul de fonctions de visibilité pour un radiomètre à synthèse d'ouverture interférométrique tel que celui représenté schématiquement à la figure 4.

A cet effet, le dispositif 300 comporte par exemple un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en oeuvre les étapes du procédé 100 de calcul de fonctions de visibilité selon l'invention. Alternativement ou en complément, le dispositif 300 comporte un ou des circuits logiques programmables (FPGA, PLD, etc.), et/ou un ou des circuits intégrés spécialisés (ASIC), et/ou un ensemble de composants électroniques discrets, etc., adaptés à mettre en oeuvre tout ou partie desdites étapes du procédé 100. En d'autres termes, le dispositif 300 comporte des moyens qui sont configurés de façon logicielle (produit programme d'ordinateur spécifique) et/ou matérielle (FPGA, PLD, ASIC, composants électroniques discrets, etc.) pour mettre en oeuvre les étapes du procédé 100 selon l'invention.

Tel qu'illustré sur la figure 4, le dispositif 300 comporte plusieurs chaînes de réception 30. Chaque chaîne de réception 30 est respectivement associée à une antenne 31 du réseau d'antennes. Dans l'exemple considéré et représenté sur la figure 4, le réseau d'antennes du radiomètre à synthèse d'ouverture interférométrique comporte un nombre K d'antennes 31. Les K antennes 31 sont référencées respectivement 31-1, 31-2, ..., 31-K. Le chaîne de réception 30 associée à l'antenne 31-1 est référencée 30-1, la chaîne de réception 30 associée à l'antenne 31-2 est référencée 30-2, ..., la chaîne de réception 30 associée à l'antenne 31-K est référencée 30-K. Le nombre de chaînes de réception utilisées par le dispositif est par exemple de l'ordre de cinquante (50) à cinq cents (500) éléments.

Dans des modes particuliers de réalisation, deux chaînes de réception 30 différentes peuvent être associées respectivement à deux polarisations différentes (par exemple une polarisation horizontale et une polarisation verticale) d'une seule et même antenne 31. De telles dispositions permettent notamment d'augmenter le nombre de chaînes de réception 30 différentes sans augmenter le nombre d'antennes du radiomètre, ce qui peut présenter des avantages en termes de coût, d'encombrement et de poids du radiomètre. De telles dispositions permettent également de réaliser une mesure de la polarisation totale du champ rayonné. Dans un tel cas, le nombre d'antennes est inférieur au nombre de chaînes de réception 30.

Dans la suite de la description, on se place à titre d'exemple et de manière nullement limitative dans le cas où le nombre d'antennes est égal au nombre de chaînes de réception 30.

Chaque chaîne de réception 30 comporte un numériseur 32 permettant de numériser, sur une bande de fréquences d'intérêt du radiomètre, un signal reçu par l'antenne 31 associée à ladite chaîne de réception 30. Le numériseur 32 met en oeuvre l'étape de numérisation 101 du procédé 100 selon l'invention. La numérisation 101 est par exemple réalisée à une fréquence d'échantillonnage au moins égale à deux fois la largeur de la bande d'intérêt du radiomètre dans le cas d'une numérisation réelle. Selon un autre exemple, la numérisation est réalisée à une fréquence au moins égale à une fois largeur de la bande d'intérêt du radiomètre dans le cas d'une numérisation en phase et en quadrature pour laquelle des échantillons complexes sont obtenus. Dans la suite de la description, on se place à titre d'exemple nullement limitatif dans le cas où les échantillons obtenus en sortie d'un numériseur 32 sont des échantillons complexes, avec une fréquence d'échantillonnage constante notée $f_s$. Dans l'exemple considéré, pour la bande L, la fréquence d'échantillonnage est de 27 millions d'échantillons complexes par seconde. On suppose que les flux d'échantillons obtenus pour les différentes chaînes de réception 30 sont synchrones, c'est-à-dire qu'ils ont été numérisés avec une horloge de numérisation commune. Il convient de noter que l'étape de numérisation 101 peut être éventuellement accompagnée d'une descente en fréquence (passage en bande de base).

Chaque chaîne de réception 30 comporte également un module de filtrage 33 configuré pour mettre en oeuvre l'étape de filtrage 102 du procédé 100 selon l'invention. Chaque module de filtrage 33 permet ainsi de filtrer le signal numérisé dans plusieurs sous-bandes de fréquences. Ainsi, au niveau de chaque chaîne de réception 30, le signal numérisé est décomposé en plusieurs canaux, chaque canal correspondant à une sous-bande de fréquences. Les sous-bandes de fréquences sont choisies de telle sorte qu'elles recouvrent la bande d'intérêt du radiomètre. On obtient ainsi en sortie d'un module de filtrage 33, pour chaque sous-bande de fréquences, plusieurs échantillons filtrés.

Un module de filtrage 33 peut par exemple être réalisé au moyen d'un banc de filtres polyphases, un banc de filtres à réponse impulsionnelle finie, ou bien par filtrage FFT (acronyme anglo-saxon pour « Fast Fourier Transform », qui se traduit en français par transformation de Fourier rapide). De tels bancs de filtres peuvent être implémentés de manière logicielle sur un ou plusieurs processeurs, ou bien de manière matérielle (par exemple à l'aide de circuits de type FPGA ou ASIC, ou bien de composants électroniques discrets).

Dans la suite de la description, on note N le nombre de sous-bandes de fréquences utilisées, c'est-à-dire le nombre de canaux en lesquels un signal numérisé obtenu en sortie d'un numériseur 32 d'une chaîne de réception 30 est décomposé par le module de filtrage 33 de ladite chaîne de réception 30. Dans l'exemple considéré, pour la bande L, le nombre N est par exemple compris entre 10 et 20. Chaque canal correspond ainsi à une sous-bande de fréquences de quelques MHz.

Les signaux filtrés peuvent être décomposés en sous-bandes de fréquences dans le domaine fréquentiel ou dans le domaine temporel. En outre, la décomposition peut être réalisée sur un bus de communication en série ou sur un bus de communication en parallèle.

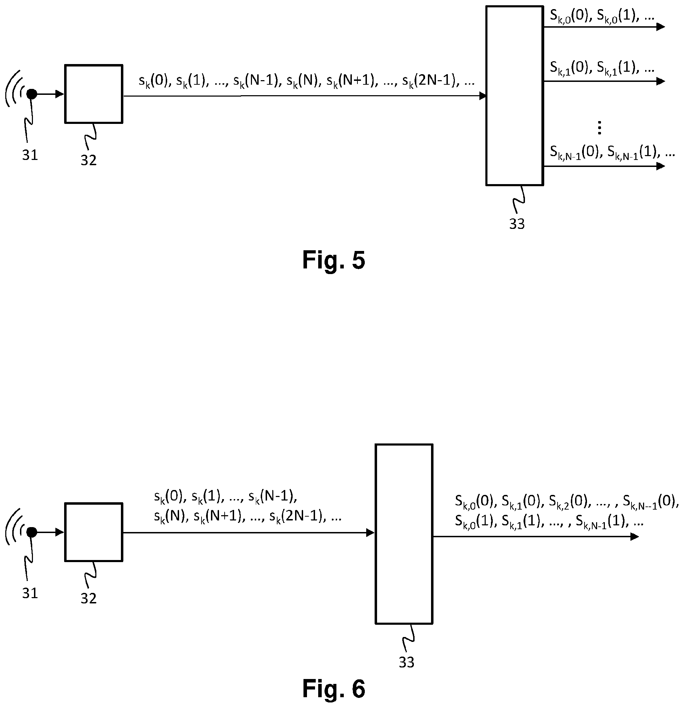

Les figures 5 à 8 illustrent les différentes configurations possibles pour la décomposition effectuée par un module de filtrage 33 d'une chaîne de réception 30 associée à une antenne 31 d'indice k (dans l'exemple considéré l'indice k est compris entre 1 et K). Pour chacune des figures 5 à 8, les échantillons $s_k(0)$, $s_k(1)$, ..., $s_k(2N-1)$ correspondent à des échantillons dans le domaine temporel obtenus en sortie d'un numériseur 32 d'une chaîne de réception 30. Les échantillons sont obtenus avec une fréquence d'échantillonnage $f_s$. Cela signifie que deux échantillons consécutifs, par exemple $s_k(0)$ et $s_k(1)$, sont espacés d'une période d'échantillonnage $T_s = 1/f_s$. Les N premiers échantillons $s_k(0)$, $s_k(1)$, ..., $s_k(N-1)$ correspondent à une première période de filtrage $\delta_0$ dont la durée $\delta t$ est égale à $N \times T_s$. Les N

échantillons suivants $s_k(N)$, $s_k(N+1)$, ..., $s_k(2N-1)$ correspondent à une deuxième période de filtrage $\delta_1$, et ainsi de suite.

La figure 5 illustre une décomposition effectuée par le module de filtrage 33 avec une sortie des échantillons filtrés en parallèle dans le domaine fréquentiel.

La figure 6 illustre une décomposition effectuée par un module de filtrage 33 avec une sortie des échantillons filtrés en série dans le domaine fréquentiel.

Pour chacune des figures 5 et 6, les échantillons filtrés $S_{k,0}(0)$, $S_{k,1}(0)$, ..., $S_{k,N-1}(0)$ obtenus dans le domaine fréquentiel en sortie du module de filtrage 33 sont associés respectivement au N sous-bandes de fréquences pour la première période de filtrage $\delta_0$. Les échantillons filtrés $S_{k,0}(1)$, $S_{k,1}(1)$, ..., $S_{k,N-1}(1)$ obtenus dans le domaine fréquentiel en sortie du module de filtrage 33 sont associés respectivement au N sous-bandes de fréquences pour la deuxième période de filtrage $\delta_1$, et ainsi de suite.

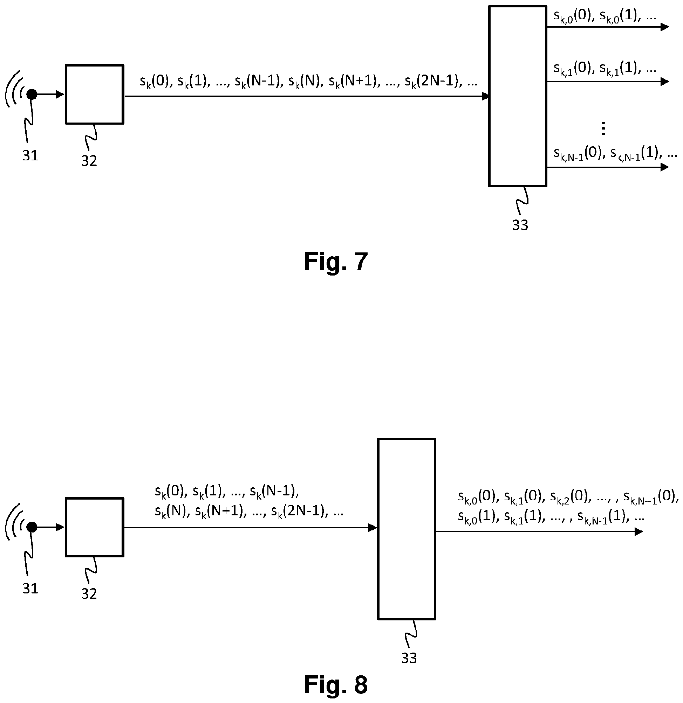

La figure 7 illustre une décomposition effectuée par le module de filtrage 33 avec une sortie des échantillons filtrés en parallèle dans le domaine temporel.

La figure 8 illustre une décomposition effectuée par un module de filtrage 33 avec une sortie des échantillons filtrés en série dans le domaine temporel.

Pour chacune des figures 7 et 8, les échantillons filtrés $s_{k,0}(0)$, $s_{k,1}(0)$, ..., $s_{k,N-1}(0)$ obtenus dans le domaine temporel en sortie du module de filtrage 33 sont associés respectivement au N sous-bandes de fréquences pour la première période de filtrage $\delta_0$. Les échantillons filtrés $s_{k,0}(1)$, $s_{k,1}(1)$, ..., $s_{k,N-1}(1)$ obtenus dans le domaine temporel en sortie du module de filtrage 33 sont associés respectivement au N sous-bandes de fréquences pour la deuxième période de filtrage $\delta_1$, et ainsi de suite.

En sortie d'un module de filtrage 33, et pour chaque sous-bande de fréquences, un échantillon filtré correspond à une période de filtrage de durée $\delta t$.

Dans la suite de la description, et tel qu'illustré sur la figure 4, on considère à titre d'exemple et de manière nullement limitative que chaque module de filtrage 33 réalise une décomposition en parallèle. Il convient de noter qu'il est possible de passer d'une sortie en série à une sortie en parallèle en utilisant un dispositif de multiplexage.

Tel qu'illustré sur la figure 4, le dispositif 300 comporte également un corrélateur 34 permettant de calculer, pour chaque sous-bande de fréquences, et pour une période d'accumulation d'une durée $\Delta t$ prédéterminée, une matrice d'intercorrélation. Un élément d'une matrice d'intercorrélation obtenue en sortie du corrélateur 34 est associé à un couple de deux antennes 31 du réseau d'antennes et prend une valeur calculée en fonction des échantillons filtrés associés auxdites antennes pendant ladite période d'accumulation. Le corrélateur 34 est ainsi configuré pour mettre en oeuvre l'étape de calcul 103 de matrices d'intercorrélation du procédé 100 selon l'invention.

Pour obtenir une telle matrice d'intercorrélation, le corrélateur 34 effectue par exemple, pour la sous-bande de fréquences considérée, une multiplication terme à terme des échantillons filtrés obtenus en sortie des modules de filtrage 33 des différentes chaînes de réception 30 et associés à ladite sous-bande de fréquences, puis une accumulation des résultats obtenus pendant ladite période d'accumulation $\Delta t$.

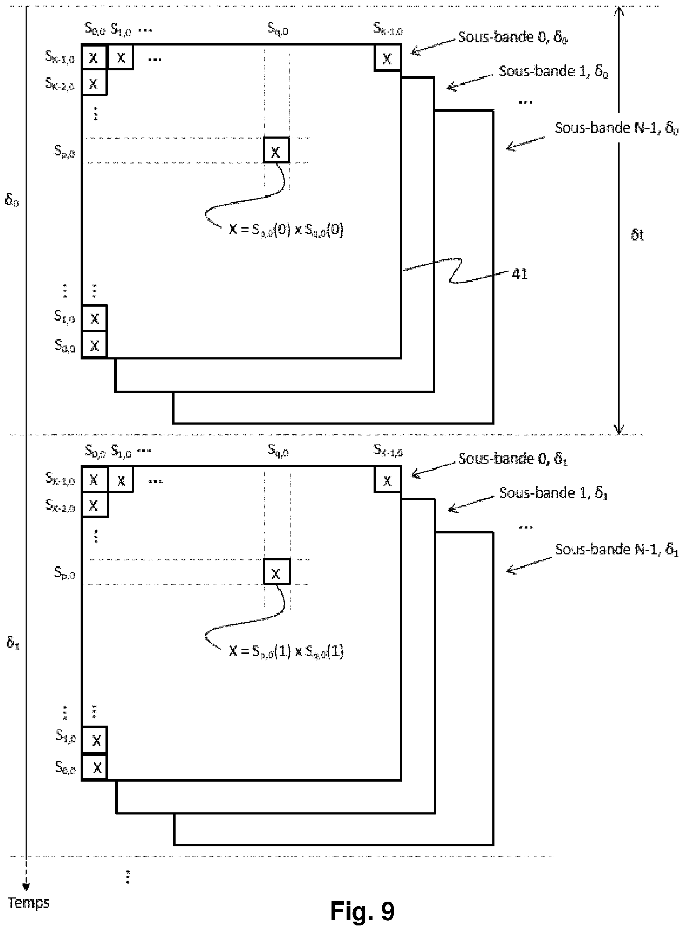

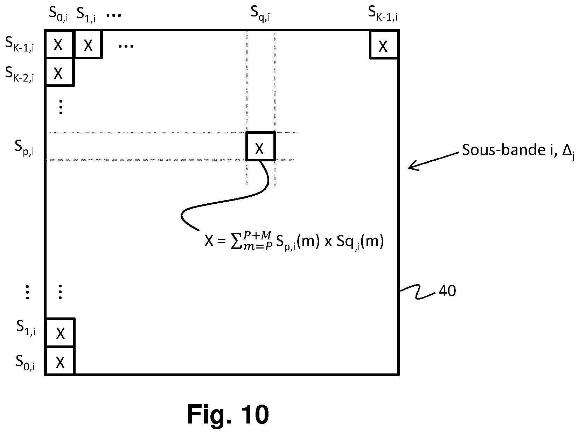

Les figure 9 et 10 illustrent ces opérations de multiplication et d'accumulation. La figure 9 représente schématiquement un ensemble de matrices d'intercorrélation 41, chaque matrice étant associée respectivement à une sous-bande de fréquences d'indice 0 à N-1 et à une période de filtrage $\delta_0$, $\delta_1$, etc. de durée $\delta t$. Pour chaque matrice d'intercorrélation 41 associée à une sous-bande de fréquences et à une période de filtrage données, un élément de la matrice est associé à un couple de deux antennes 31 du réseau d'antennes et a pour valeur la multiplication des échantillons filtrés obtenus en sortie des modules de filtrage 33 des chaînes de réception 30 associées respectivement auxdites antennes 31 pour la période de filtrage considérée et pour la sous-bande de fréquences considérée. Par exemple, pour la période de filtrage $\delta_0$ et pour la sous-bande de fréquences d'indice 0, l'élément à la position (p, q) de la matrice d'intercorrélation 41 est associé au couple formé par les antennes d'indices respectifs p et q et prend pour valeur $S_{p,0}(0) \times S_{q,0}(0)$.

Les valeurs obtenues sont accumulées pendant une période d'accumulation de durée $\Delta t$ prédéterminée. Par exemple, la période d'accumulation $\Delta t$ correspond à un nombre M de périodes de filtrage de durée $\delta t$ : on a alors $\Delta t = M \times \delta t = M \times N \times T_s$. Par exemple, la durée de la période d'accumulation $\Delta t$ est comprise entre 0,1 et 2 secondes.

La figure 10 représente une matrice d'intercorrélation 40, pour une sous-bande de fréquence d'indice i et pour une période d'accumulation d'indice j, correspondant à l'accumulation de M matrices d'intercorrélations 41 associées à la sous-bande de fréquences d'indice i et associées respectivement à M périodes de filtrage $\delta_P$, $\delta_{P+1}$, ..., $\delta_{P+M}$ correspondant à la période d'accumulation $\Delta_j$. Par exemple, pour la période d'accumulation $\Delta_j$ et pour la sous-bande de fréquences d'indice 0, l'élément à la position (p, q) de la matrice d'intercorrélation 40 associé au couple formé par les antennes d'indices respectifs p et q prend pour valeur

$$\sum_{m=P}^{P+M} S_{p,i}(m) \times S_{q,i}(m)$$

Il est à noter que compte tenu des propriétés de symétrie des calculs d'intercorrélation, il suffit de calculer seulement la moitié des éléments de la matrice. En outre, il est possible de distribuer l'ensemble des calculs à effectuer sur plusieurs dispositifs, par exemple en séparant les calculs par sous-bandes de fréquences.

Les accumulations des résultats de corrélation sont par exemple stockées dans des registres séparés pour chacune des sous-bandes de fréquences. Lorsqu'une accumulation sur une période complète d'accumulation $\Delta t$ est complétée, les registres contenant les accumulations sont remis à zéros et les valeurs d'intercorrélation pour la période d'accumulation suivante recommencent à être accumulées.

Une matrice d'intercorrélation telle que celle illustrée à la figure 10 est obtenue en sortie du corrélateur 34 pour chacune des N sous-bandes de fréquences utilisées et pour chaque période d'accumulation.

Tel qu'illustré sur la figure 4, le dispositif 300 comporte également un module de détection 35 permettant de détecter des matrices d'intercorrélation 40 invalides parmi un ensemble de matrices 40 d'intercorrélation obtenues en sortie du corrélateur 34 respectivement pour les différentes sous-bandes de fréquences et pour différentes périodes d'accumulation. Le module de détection 35 est ainsi configuré pour mettre en oeuvre l'étape de détection 104 du procédé 100 selon l'invention.

Chaque matrice d'intercorrélation 40 obtenue en sortie du corrélateur 34 correspond à un bloc temps/fréquences. Un bloc temps/fréquences correspond à une période d'accumulation $\Delta t$ et à une des N sous-bandes de fréquences. En l'absence d'interférence, les propriétés statistiques des matrices d'intercorrélation sont sensiblement identiques sur tous les blocs temps/fréquences. Il existe différentes méthodes pour détecter la présence d'interférence au sein d'un bloc temps/fréquences.

Selon un premier exemple, il est envisageable d'analyser les valeurs accumulées d'intercorrélation au sein d'une matrice d'intercorrélation 40, et de déterminer un seuil pour lequel la matrice d'intercorrélation doit être considérée comme invalide car polluée par des interférences si une ou plusieurs valeurs accumulées d'intercorrélation au sein de la matrice d'intercorrélation sont supérieures au seuil. Un signal anthropique est en effet généralement ponctuel dans l'espace, contrairement au bruit thermique naturel émis par la Terre que le radiomètre cherche à mesurer. Pour deux antennes éloignées l'une par rapport à l'autre, il existe une intercorrélation relativement forte pour une interférence correspondant à un signal anthropique. Il existe par contre une intercorrélation relativement faible pour le bruit thermique naturel mesuré par chacune de ces deux antennes, ceci est particulièrement vrai si la mesure s'effectue sur une polarisation orthogonale. Ainsi, en analysant les valeurs d'intercorrélations anormales pour certains couples d'antennes, et plus particulièrement pour des antennes de l'interféromètre les plus éloignées, il est possible, en faisant des hypothèses pire cas sur les fluctuations spatiales et angulaires des flux de puissance collectés par les antennes dans le cas d'un bruit naturel, de définir un seuil dont le dépassement sera dû avec une faible probabilité de fausse alarme à un signal anthropique.

Selon un autre exemple, il est envisageable d'analyser les variations des valeurs d'intercorrélations pour une sous-bande de fréquences par rapport aux autres sous-bandes de fréquences, et de déterminer un seuil maximal de variation au-delà duquel une matrice d'intercorrélation doit être considérée comme invalide car polluée par des interférences. En effet, en l'absence d'interférence, les valeurs accumulées d'intercorrélation sont sensiblement identiques d'une sous-bande de fréquences à une autre. En revanche, une interférence liée à un signal anthropique impactera généralement une sous-bande de fréquences particulière sans impacter les autres sous-bandes de fréquences.

Pour augmenter la sélectivité et la spécificité statistique de ces méthodes de détection, une combinaison utilisant tout ou partie des couples d'intercorrélation peut être envisagé.

D'autres méthodes pourraient être envisagées pour détecter la présence d'interférence au sein d'une matrice d'intercorrélation 40. Le choix d'une méthode particulière ne constitue qu'une variante de l'invention.

Pour chaque matrice d'intercorrélation 40 obtenue en sortie du corrélateur 34 et correspondant à un bloc temps/fréquences particulier, l'information si ladite matrice est valide ou invalide est alors disponible en sortie du module de détection 35.

Tel qu'illustré sur la figure 4, le dispositif 300 comporte également un module de calcul 36 permettant de calculer des fonctions de visibilité à partir des matrices d'intercorrélation 40 qui n'ont pas été détectées comme invalides par le module de détection 35. Le module de calcul 36 est ainsi configuré pour mettre en oeuvre l'étape de calcul 105 des fonctions de visibilité du procédé 100 selon l'invention.

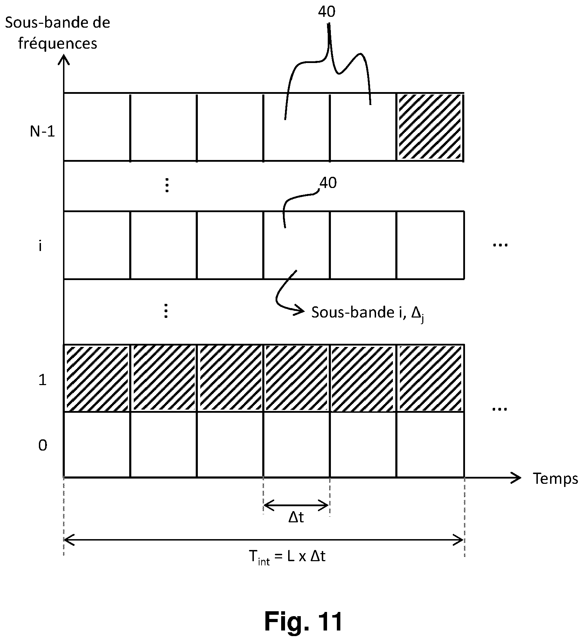

Tel qu'illustré sur la figure 11, l'ensemble des blocs temps/fréquences pour une période d'intégration $T_{int}$ peut être représenté sous la forme d'un diagramme avec le temps en abscisse et les fréquences en ordonnée. Une période d'intégration $T_{int}$ correspond par exemple à un nombre L de périodes d'accumulation de durée $\Delta t$. On a alors $T_{int} = L \times \Delta t$. Dans l'exemple considéré représenté sur la figure 11, le nombre L de périodes d'accumulation comprises dans une période d'intégration vaut 6 (L = 6). Par exemple, le nombre L de périodes d'accumulation de durée $\Delta t$ est de l'ordre de 100 à 1000.

La durée d'une période d'accumulation $\Delta t$ peut être avantageusement choisie pour être inférieure à la durée d'une période de répétition pressentie de signaux anthropiques impulsionnels à supprimer, comme par exemple des signaux radars. De telles dispositions permettent en effet de s'assurer qu'une partie au moins des matrices de corrélation 40 obtenues sur une période d'intégration $T_{int}$ ne sont pas impactées par ces signaux interférents.

L'ensemble de blocs temps/fréquences représentés à la figure 11 correspond à un ensemble de L x N matrices d'intercorrélation 40 obtenues en sortie du corrélateur 34. Sur la figure 11, les blocs temps/fréquences correspondant à des matrices d'intercorrélation 40 détectées comme invalides par le module de détection 35 sont hachurés. Ainsi, dans l'exemple considéré et représenté sur la figure 11, pour la période d'intégration $T_{int}$ considérée, tous les blocs temps/fréquences correspondant à la sous-bande de fréquences d'indice 1 sont invalides. Il en va de même du bloc temps/fréquences correspondant à la sous-bande de fréquences d'indice N-1 et à la dernière période d'accumulation.

Ainsi, pour une période d'intégration $T_{int}$, le module de détection 35 fournit au module de calcul 36 un masque à appliquer à l'ensemble des matrices d'intercorrélation 40 obtenues en sortie du corrélateur 34 (c'est-à-dire un masque à appliquer à l'ensemble des blocs temps/fréquences correspondant à la période d'intégration $T_{int}$ considérée). Le module de calcul 36 peut alors calculer les fonctions de visibilité pour la période d'intégration $T_{int}$ considérée à partir des matrices d'intercorrélation 40 qui n'ont pas été détectées comme invalides par le module de détection 35. Par exemple, le module de calcul 36 peut moyenner les valeurs d'intercorrélation des blocs temps/fréquences valides (c'est-à-dire les blocs temps/fréquences non contaminés par des interférences). Pour limiter l'occupation mémoire, une implémentation récursive peut être privilégiée.

Les valeurs d'intercorrélation ainsi moyennées sur une période d'intégration peuvent alors permettre d'obtenir, de façon conventionnelle, des fonctions de visibilité à partir desquelles il est possible de construire une image sous la forme d'un champ de température de brillance.

Dans des modes particuliers de mise en oeuvre, il est envisageable, pendant l'étape de calcul 105 des fonctions de visibilité, de ne pas regrouper les corrélations par sous-bandes de fréquences, ou de ne les regrouper que partiellement. Dans un tel cas, les valeurs d'intercorrélation des blocs temps/fréquences valides sont moyennés par sous-bandes de fréquences ou par groupe de sous-bandes de fréquences. Un calcul par sous-bande de fréquences de la corrélation permet d'avoir accès à une reconstruction par sous-bande des températures de brillance, ce qui permet une reconstruction spatiale plus adaptée.

La description ci-avant illustre clairement que, par ses différentes caractéristiques et leurs avantages, la présente invention atteint les objectifs fixés.

En particulier, la solution proposée permet de détecter et supprimer des interférences dont les niveaux de puissance par rapport au signal utile (à savoir en l'occurrence le bruit thermique naturel émis par la Terre) sont nettement plus faibles que dans les méthodes utilisées ou envisagées jusqu'à présent dans le domaine de la radiométrie à synthèse d'ouverture interférométrique.

La détection des interférences est réalisée à l'aide des valeurs d'intercorrélation calculées par le corrélateur 34, avant l'étape de synthèse d'image. De telles dispositions permettent d'atteindre des performances de détection des interférences supérieures à une détection effectuée avant les calculs de corrélation ou après la synthèse d'image. En effet, le seuil minimal de détection d'interférences susceptible d'être utilisé en amont de la corrélation est généralement nettement supérieur au seuil de détection d'interférences atteint par l'invention. Aussi, la solution proposée permet de supprimer les interférences plus efficacement que sur des images reconstruites car elle permet d'exploiter les portions du signal non contaminées par les interférences et ne nécessite pas une caractérisation précise des signaux interférents.

De plus, la détermination d'un masque des blocs temps/fréquences permet de garder l'information non contaminée par les interférences, ce qui n'est pas possible avec des méthodes conventionnelles de détection d'interférences postérieures à la synthèse d'image qui impliquent une suppression pure et simple d'échantillons du fait du manque de connaissance a priori de la source interférente.

En outre, la solution proposée est particulièrement bien adaptée pour le cas où un radiomètre à synthèse d'ouverture interférométrique est embarqué dans une charge utile d'un satellite. En effet, dans un tel cas, le calcul de la corrélation à bord du satellite apparaît comme indispensable car le nombre potentiellement important de chaînes de réception 30 implique qu'il est peu réaliste de transmettre tous les échantillons obtenus à une station au sol pour un traitement des échantillons par la station. Le calcul des corrélations permet une compression significative de l'information et par conséquent une diminution du volume de données à traiter à bord par le satellite. De plus, la solution proposée ne nécessite pas d'avoir recours à des mémoires tampons importantes.

Il est à noter que les modes de mise en oeuvre et de réalisation considérés ci-dessus ont été décrits à titre d'exemples non limitatifs, et que d'autres variantes sont par conséquent envisageables.

Notamment, différents choix sont possibles pour le nombre de chaînes de réception 30, le nombre d'antennes 31, le nombre de sous-bandes de fréquences en lesquelles un signal reçu par une chaîne de réception 30 est décomposé, la fréquence $f_s$ d'échantillonnage, la durée $\delta t$ d'une période de filtrage, la durée $\Delta t$ d'une période d'accumulation, la durée d'une période d'intégration $T_{int}$, etc. Des choix de valeurs particulières pour ces paramètres ne constituent que des variantes de l'invention.

Aussi, différentes méthodes sont envisageables pour détecter qu'une matrice d'intercorrélation 40 est invalide. Là encore, le choix d'une méthode particulière n'est qu'une variante de l'invention.

L'invention a été décrite en considérant le cas où un radiomètre à synthèse d'ouverture interférométrique est embarqué dans une charge utile d'un satellite placé en orbite pour une mission d'observation de la Terre. Rien n'exclut cependant que le procédé 100 et le dispositif 300 selon l'invention soient utilisés pour une application différente, comme par exemple en radioastronomie.

## Revendications

1. Procédé (100) de calcul de fonctions de visibilité pour un radiomètre à synthèse d'ouverture interférométrique comportant un réseau d'antennes et plusieurs chaînes de réception (30), chaque chaîne de réception (30) étant respectivement associée à une antenne (31) du réseau d'antennes, ledit procédé (100) comportant, pour chaque chaîne de réception (30), une numérisation (101), sur une bande de fréquences d'intérêt, d'un signal reçu par l'antenne (31) de ladite chaîne de réception (30) avec une fréquence d'échantillonnage au moins égale à la largeur de ladite bande de fréquences d'intérêt, ledit procédé (100) comportant en outre :

   - pour chaque chaîne de réception (30), un filtrage (102) du signal numérisé dans plusieurs sous-bandes de fréquences, l'ensemble desdites sous-bandes de fréquences recouvrant la bande d'intérêt, afin d'obtenir, dans chaque sous-bande de fréquences, plusieurs échantillons filtrés, chaque échantillon filtré correspondant à une période de filtrage de durée ($\delta t$) prédéterminée,
   - un calcul (103), pour chaque sous-bande de fréquences, d'une matrice (40) d'intercorrélation, un élément d'une matrice (40) d'intercorrélation étant associé à un couple de deux antennes (31) du réseau d'antennes et prenant une valeur calculée en fonction des échantillons filtrés associés auxdites antennes pendant une période d'accumulation de durée ($\Delta t$) prédéterminée,
   - une détection (104) de matrices d'intercorrélation invalides parmi un ensemble de matrices (40) d'intercorrélation obtenues respectivement pour les différentes sous-bandes de fréquences et pour différentes périodes d'accumulation,
   - un calcul (105) des fonctions de visibilité à partir des matrices d'intercorrélation (40) qui n'ont pas été détectées comme étant invalides.

2. Procédé (100) selon la revendication 1 dans lequel la détection (104) de matrices d'intercorrélation invalides parmi un ensemble de matrices (40) d'intercorrélation obtenues respectivement pour les différentes sous-bandes de fréquences et pour différentes périodes d'accumulation comporte une comparaison des valeurs d'intercorrélation au sein d'une même matrice d'intercorrélation (40) par rapport à un seuil prédéterminé.

3. Procédé (100) selon la revendication 1 dans lequel la détection (104) de matrices d'intercorrélation invalides parmi un ensemble de matrices (40) d'intercorrélation obtenues respectivement pour les différentes sous-bandes de fréquences et pour différentes périodes d'accumulation comporte une comparaison d'une variation des valeurs d'intercorrélation entre plusieurs matrices d'intercorrélation (40) correspondant à plusieurs sous-bandes de fréquences différentes par rapport à un seuil prédéterminé.

4. Procédé (100) selon l'une des revendications 1 à 3 dans lequel la durée ($\Delta$t) d'une période d'accumulation est inférieure à la durée d'une période de répétition pressentie de signaux anthropiques interférents.

5. Produit programme d'ordinateur comportant un ensemble d'instructions de code de programme qui, lorsqu'elles sont exécutées par un ou plusieurs processeurs d'un dispositif, configurent le ou les processeurs pour mettre en oeuvre un procédé (100) de calcul de fonctions de visibilité selon l'une des revendications 1 à 4, ledit dispositif comportant plusieurs chaînes de réception (30), chaque chaîne de réception (30) étant destinée à être associée respectivement à une antenne (31) du réseau d'antennes, chaque chaîne de réception (30) comportant un numériseur (32) permettant de numériser, sur une bande de fréquences d'intérêt, un signal reçu par l'antenne (31) associée à ladite chaîne de réception (30) avec une fréquence d'échantillonnage au moins égale à la largeur de ladite bande d'intérêt.

6. Dispositif (300) de calcul de fonctions de visibilité pour un radiomètre à synthèse d'ouverture interférométrique comportant un réseau d'antennes, ledit dispositif (300) comportant plusieurs chaînes de réception (30), chaque chaîne de réception (30) étant destinée à être associée respectivement à une antenne (31) du réseau d'antennes, chaque chaîne de réception (30) comportant un numériseur (32) permettant de numériser, sur une bande de fréquences d'intérêt, un signal reçu par l'antenne (31) associée à ladite chaîne de réception (30) avec une fréquence d'échantillonnage au moins égale à la largeur de ladite bande d'intérêt, ledit dispositif (300) comportant en outre :

> - pour chaque chaîne de réception (30), un module de filtrage (33) permettant de filtrer le signal numérisé dans plusieurs sous-bandes de fréquences, l'ensemble desdites sous-bandes de fréquences recouvrant la bande d'intérêt, afin d'obtenir en sortie du module de filtrage (33), dans chaque sous-bande de fréquences, plusieurs échantillons filtrés, chaque échantillon filtré correspondant à une période de filtrage de durée ($\delta$t) prédéterminée,
> - un corrélateur (34) permettant de calculer, pour chaque sous-bande de fréquences, une matrice (40) d'intercorrélation, un élément d'une matrice (40) d'intercorrélation étant associé à un couple de deux antennes (31) du réseau d'antennes et prenant une valeur calculée en fonction des échantillons filtrés associés auxdites antennes pendant une période d'accumulation de durée ($\Delta$t) prédéterminée,
- un module de détection (35) permettant de détecter des matrices d'intercorrélation invalides parmi un ensemble de matrices (40) d'intercorrélation obtenues respectivement pour les différentes sous-bandes de fréquences et pour différentes périodes d'accumulation ($\Delta$t),
- un module de calcul (36) permettant de calculer des fonctions de visibilité à partir des matrices d'intercorrélation (40) qui n'ont pas été détectées comme étant invalides.

7. Radiomètre à synthèse d'ouverture interférométrique comportant un dispositif (300) de calcul de fonctions de visibilité selon la revendication 6.

8. Radiomètre selon la revendication 7 dans lequel au moins deux chaînes de réception (30) différentes sont associées respectivement à deux polarisations différentes d'une seule et même antenne (31).

9. Charge utile d'un satellite comportant un radiomètre à synthèse d'ouverture interférométrique selon l'une des revendications 7 à 8.

**Patentansprüche**

1. Verfahren (100) zur Berechnung von Sichtbarkeitsfunktionen für ein interferometrisches Radiometer mit synthetischer Apertur, umfassend ein Netzwerk von Antennen und mehrere Empfangsketten (30), wobei jede Empfangskette (30) jeweils mit einer Antenne (31) des Netzwerks von Antennen assoziiert ist, wobei das Verfahren (100) für jede Empfangskette (30) eine Digitalisierung (101), auf einem Frequenzband von Interesse, eines von der Antenne (31) der Empfangskette (30) mit einer Abtastfrequenz von mindestens gleich der Breite des Frequenzbands von Interesse empfangenen Signals umfasst, wobei das Verfahren (100) des Weiteren umfasst:

> - für jede Empfangskette (30), eine Filterung (102) des digitalisierten Signals in mehrere Frequenzteilbändern, wobei die Gesamtheit der Frequenzteilbänder das Band von Interesse abdeckt, um in jedem Frequenzteilband mehrere gefilterte Abtastungen zu erhalten, wobei jede gefilterte Abtastung einem Filterungszeitraum von vorher festgelegter Dauer ($\delta$t) entspricht,
> - eine Berechnung (103), für jedes Frequenzteilband, einer Kreuzkorrelationsmatrix (40), wobei ein Element einer Kreuzkorrelationsmatrix (40) mit einem Paar von zwei Antennen (31) des Netzwerks von Antennen assoziiert ist und während eines Akkumulationszeitraums von vorher festgelegter Dauer (∆t) einen berechneten Wert in Funktion der mit den Antennen assoziierten gefilterten Abtastungen annimmt,

- eine Detektion (104) von ungültigen Kreuzkorrelationsmatrizen inmitten einer Gesamtheit von Kreuzkorrelationsmatrizen (40), die jeweils für die unterschiedlichen Frequenzteilbänder und für unterschiedliche Akkumulationszeiträume erhalten wurden,

- eine Berechnung (105) von Sichtbarkeitsfunktionen ausgehend von Kreuzkorrelationsmatrizen (40), die nicht als ungültig detektiert worden sind.

2. Verfahren (100) nach Anspruch 1, wobei die Detektion (104) von ungültigen Kreuzkorrelationsmatrizen inmitten einer Gesamtheit von jeweils für die unterschiedlichen Frequenzteilbänder und für unterschiedliche Akkumulationszeiträume erhaltenen Kreuzkorrelationsmatrizen (40) einen Vergleich von Kreuzkorrelationswerten innerhalb einer gleichen Kreuzkorrelationsmatrix (40) bezüglich eines vorher festgelegten Schwellenwerts umfasst.

3. Verfahren (100) nach Anspruch 1, wobei die Detektion (104) von ungültigen Kreuzkorrelationsmatrizen inmitten einer Gesamtheit von jeweils für die unterschiedlichen Frequenzteilbänder und für unterschiedliche Akkumulationszeiträume erhaltenen Kreuzkorrelationsmatrizen (40) einen Vergleich einer Variation von Kreuzkorrelationswerten zwischen mehreren Kreuzkorrelationsmatrizen (40) umfasst, die mehreren unterschiedlichen Frequenzteilbändern bezüglich eines vorher festgelegten Schwellenwerts entsprechen.

4. Verfahren (100) nach einem der Ansprüche 1 bis 3, wobei die Dauer (∆t) eines Akkumulationszeitraums kürzer als die Dauer eines erwarteten Wiederholungszeitraums interferierender anthropogener Signale ist.

5. Computerprogrammprodukt, umfassend eine Gesamtheit von Programmcodeanweisungen, die, wenn sie von einem oder mehreren Prozessoren einer Vorrichtung ausgeführt werden, den oder die Prozessoren konfigurieren, um ein Verfahren (100) der Berechnung von Sichtbarkeitsfunktionen nach einem der Ansprüche 1 bis 4 durchzuführen, wobei die Vorrichtung mehrere Empfangsketten (30) umfasst, wobei jede Empfangskette (30) dazu bestimmt ist, jeweils mit einer Antenne (31) eines Netzwerks von Antennen eines interferometrischen Radiometers mit synthetischer Apertur assoziiert zu werden, wobei jede Empfangskette (30) einen Digitalisierer (32) umfasst, der gestattet, ein von der Antenne (31) auf einem mit der Empfangskette (30) assoziierten Frequenzband von Interesse empfangenes Signal mit einer Abtastfrequenz mindestens gleich der Breite des Bands von Interesse zu digitalisieren.

6. Vorrichtung (300) zur Berechnung von Sichtbarkeitsfunktionen für ein interferometrisches Radiometer mit synthetischer Apertur, wobei die Vorrichtung (300) mehrere Empfangsketten (30) umfasst, wobei jede Empfangskette (30) dazu bestimmt ist, jeweils mit einer Antenne (31) des Netzwerks von Antennen assoziiert zu werden, wobei jede Empfangskette (30) einen Digitalisierer (32) umfasst, der gestattet, ein von der mit der Empfangskette (30) assoziierten Antenne (31) empfangenes Signal mit einer Abtastfrequenz mindestens gleich der Breite des Bands von Interesse zu digitalisieren, wobei die Vorrichtung (300) des Weiteren umfasst:

- für jede Empfangskette (30), ein Filterungsmodul (33), das gestattet, das digitalisierte Signal in mehreren Frequenzteilbändern zu filtern, wobei die Gesamtheit der Frequenzteilbänder das Band von Interesse abdeckt, um am Ausgang des Filterungsmoduls (33) in jedem Frequenzteilband mehrere gefilterte Abtastungen zu erhalten, wobei jede gefilterte Abtastung einem Filterungszeitraum von vorher festgelegter Dauer (δt) entspricht,

- einen Korrelator (34), der gestattet, für jedes Frequenzteilband eine Kreuzkorrelationsmatrix (40) zu berechnen, wobei ein Element einer Kreuzkorrelationsmatrix (40) mit einem Paar von zwei Antennen (31) des Netzwerks von Antennen assoziiert ist und während eines Akkumulationszeitraums von vorher festgelegter Dauer (∆t) einen berechneten Wert in Funktion der mit den Antennen assoziierten gefilterten Abtastungen annimmt,

- ein Detektionsmodul (35), das gestattet, ungültige Kreuzkorrelationsmatrizen inmitten einer Gesamtheit von Kreuzkorrelationsmatrizen (40), die jeweils für die unterschiedlichen Frequenzteilbänder und für unterschiedliche Akkumulationszeiträume (∆t) erhalten wurden, zu detektieren,

- ein Berechnungsmodul (36), das gestattet, Sichtbarkeitsfunktionen ausgehend von Kreuzkorrelationsmatrizen (40), die nicht als ungültig detektiert worden sind, zu berechnen.

7. Interferometrisches Radiometer mit synthetischer Apertur, umfassend eine Vorrichtung (300) zur Berechnung von Sichtbarkeitsfunktionen nach Anspruch 6.

8. Radiometer nach Anspruch 7, wobei mindestens zwei unterschiedliche Empfangsketten (30) jeweils mit zwei unterschiedlichen Polarisationen von ein und derselben Antenne (31) assoziiert sind.

9. Nutzlast eines Satelliten, umfassend ein interferometrisches Radiometer mit synthetischer Apertur nach einem der Ansprüche 7 bis 8.

**Claims**

1. A method (100) for calculating visibility functions for an interferometric synthetic aperture radiometer including an antenna array and several receiver chains (30), each receiver chain (30) being respectively associated with an antenna (31) of the antenna array, said method (100) including, for each receiver chain (30), digitising (101), over a frequency band of interest, a signal received by the antenna (31) of said receiver chain (30) with a sampling frequency at least equal to the width of said frequency band of interest, said method (100) further including:

   - for each receiver chain (30), filtering (102) the digitised signal in several frequency sub-bands, all of said frequency sub-bands covering the band of interest, in order to obtain, in each frequency sub-band, several filtered samples, each filtered sample corresponding with a filtering period having a predetermined duration ($\delta$t),
   - calculating (103), for each frequency sub-band, an intercorrelation matrix (40), an element of an intercorrelation matrix (40) being associated with a pair of two antennas (31) of the antenna array and taking a value calculating as a function of the filtered samples associated with said antennas during an accumulation period having a predetermined duration ($\Delta$t),
   - detecting (104) invalid intercorrelation matrices from a set of intercorrelation matrices (40) respectively obtained for the different frequency sub-bands and for different accumulation periods,
   - calculating (105) visibility functions from the intercorrelation matrices (40) which have not been detected as invalid.

2. The method (100) according to claim 1, wherein detecting (104) invalid intercorrelation matrices from a set of intercorrelation matrices (40) respectively obtained for the different frequency sub-bands and for different accumulation periods includes comparing intercorrelation values within a same intercorrelation matrix (40) relative to a predetermined threshold.

3. The method (100) according to claim 1, wherein detecting (104) invalid intercorrelation matrices from a set of intercorrelation matrices (40) respectively obtained for the different frequency sub-bands and for different accumulation period includes comparing a variation in the intercorrelation values between several intercorrelation matrices (40) corresponding to several different frequency sub-bands relative to a predetermined threshold.

4. The method (100) according to claims 1 to 3, wherein the duration ($\Delta$t) of an accumulation period is lower than the duration of an anticipated repetition period of interfering anthropic signals.

5. A computer programme product including a set of program code instructions which, when run by one or more processors of a device, configure the processor(s) to implement a method (100) for calculating visibility functions according to one of claims 1 to 4, said device including several receiver chains (30), each receiver chain (30) being intended to be respectively associated with an antenna (31) of an antenna array of an interferometric synthetic aperture radiometer, each receiver chain (30) including a digitiser (32) for digitising, over a frequency band of interest, a signal received by the antenna (31) associated with said receiver chain (30) with a sampling frequency at least equal to the width of said band of interest.

6. A device (300) for calculating visibility functions for an interferometric synthetic aperture radiometer including an antenna array, said device (300) including several receiver chains (30), each receiver chain (30) being intended to be respectively associated with an antenna (31) of an antenna array, each receiver chain (30) including a digitiser (32) for digitising, over a frequency band of interest, a signal received by the antenna (31) associated with said receiver chain (30) with a sampling frequency at least equal to the width of said band of interest, said device (300) further including:

   - for each receiver chain (30), a filtering module (33) for filtering the digitised signal in several frequency sub-bands, all of said frequency sub-bands covering the band of interest, in order to obtain at the output of the filtering module (33), in each frequency sub-band, several filtered samples, each filtered sample corresponding to a filtering period having a predetermined duration ($\delta$t),
   - a correlator (34) for calculating, for each frequency sub-band, an intercorrelation matrix (40), an element of an intercorrelation matrix (40) being associated with a pair of two antennas (31) of the antenna array and taking a value calculating as a function of the filtered samples associated with said antennas during an accumulation period having a predetermined duration

(Δt),
- a detection module (35) for detecting invalid intercorrelation matrices from a set of intercorrelation matrices (40) respectively obtained for the different frequency sub-bands and for different accumulation periods (Δ**t**),
- a calculation module (36) for calculating visibility functions from intercorrelation matrices (40) which have not been detected as invalid.

7. An interferometric synthetic aperture radiometer including a device (300) for calculating visibility functions according to claim 6.

8. The radiometer according to claim 7, wherein at least two different receiver chains (30) are respectively associated with two different polarisations of one and the same antenna (31).

9. A payload of a satellite including an interferometric synthetic aperture radiometer according to one of claims 7 to 8.

**Fig. 1**

Fig. 2

100

```
        ┌──────────┐
        │          │ ⌇ 101
        └────┬─────┘
             │
             ▼
        ┌──────────┐
        │          │ ⌇ 102
        └────┬─────┘
             │
             ▼
        ┌──────────┐
        │          │ ⌇ 103
        └────┬─────┘
             │
             ▼
        ┌──────────┐
        │          │ ⌇ 104
        └────┬─────┘
             │
             ▼
        ┌──────────┐
        │          │ ⌇ 105
        └──────────┘
```

# Fig. 3

**Fig. 4**

$s_k(0), s_k(1), \ldots, s_k(N-1), s_k(N), s_k(N+1), \ldots, s_k(2N-1), \ldots$

$S_{k,0}(0), S_{k,0}(1), \ldots$

$S_{k,1}(0), S_{k,1}(1), \ldots$

$S_{k,N-1}(0), S_{k,N-1}(1), \ldots$

31

32

33

**Fig. 5**

$s_k(0), s_k(1), \ldots, s_k(N-1),$
$s_k(N), s_k(N+1), \ldots, s_k(2N-1), \ldots$

$S_{k,0}(0), S_{k,1}(0), S_{k,2}(0), \ldots, , S_{k,N-1}(0),$
$S_{k,0}(1), S_{k,1}(1), \ldots, , S_{k,N-1}(1), \ldots$

31

32

33

**Fig. 6**

$s_k(0), s_k(1), ..., s_k(N-1), s_k(N), s_k(N+1), ..., s_k(2N-1), ...$

$s_{k,0}(0), s_{k,0}(1), ...$

$s_{k,1}(0), s_{k,1}(1), ...$

$s_{k,N-1}(0), s_{k,N-1}(1), ...$

31

32

33

## Fig. 7

$s_k(0), s_k(1), ..., s_k(N-1),$
$s_k(N), s_k(N+1), ..., s_k(2N-1), ...$

$s_{k,0}(0), s_{k,1}(0), s_{k,2}(0), ..., , s_{k,N-1}(0),$
$s_{k,0}(1), s_{k,1}(1), ..., , s_{k,N-1}(1), ...$

31

32

33

## Fig. 8

$X = S_{p,0}(0) \times S_{q,0}(0)$

$X = S_{p,0}(1) \times S_{q,0}(1)$

Sous-bande 0, $\delta_0$

Sous-bande 1, $\delta_0$

Sous-bande N-1, $\delta_0$

Sous-bande 0, $\delta_1$

Sous-bande 1, $\delta_1$

Sous-bande N-1, $\delta_1$

Temps

## Fig. 9

$$X = \sum_{m=P}^{P+M} S_{p,i}(m) \times S_{q,i}(m)$$

Sous-bande i, $\Delta_j$

40

**Fig. 10**

40

Sous-bande de
fréquences

N-1

i

Sous-bande i, $\Delta_j$

1

0

Temps

$\Delta t$

$T_{int} = L \times \Delta t$

# Fig. 11

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 108375767 A

**Littérature non-brevet citée dans la description**

- **ZHANG CHENG et al.** *13TH SPECIALIST MEETING ON MICROWAVE RADIOMETRY AND REMOTE SENSING OF THE ENVIRONMENT (MICRORAD),* 2014